# EUROPEAN PATENT APPLICATION

(11) **EP 0 628 450 A1**
(43) Date of publication of application: **14.12.1994**
(21) Application number: 94304592.2
(22) Date of filing: 10.06.1994
(51) Int. Cl.: B60R 1/02

(54) **Rear view mirror assembly**

(30) Priority: 10.06.1993 GB 9311976
(71) Applicant: BRITAX (GECO) S.A., F-77981 St. Fargeau-Ponthierry Cédex (FR)
(72) Inventor: Carbonel, Michel, 772740 Champs S/Marne (FR)
(74) Representative: Hollinghurst, Antony

(57) **Abstract**

A vehicle rear view mirror assembly comprises a mirror carrier (22) pivotally mounted on an intermediate member (20) which itself is pivotally mounted in a case (10). A main adjustment mechanism (18) adjusts the orientation of the intermediate member (20) relative to the mirror case (10) so as to position the mirror to provide a normal filed of view. An auxiliary adjustment mechanism (32,34) makes a variation to the orientation of the mirror carrier (22) relative to the intermediate member (20) so as to position the mirror to provide a second field of view, e.g. of the corresponding rear wheel of the vehicle. A drive mechanism (44) for the auxiliary adjustment mechanism (32,34) is mounted separately from both the intermediate member (20) and the mirror carrier (22), and is coupled to the auxiliary adjustment mechanism (32,34) by a flexible drive cable (42).

## Description

This invention relates to a rear view mirror assembly of the type comprising a mirror case, a mirror pivotally mounted in the case for angular movement relative thereto, main adjustment means for adjusting the orientation of the mirror relative to the mirror case so as to position the mirror to provide a first field of view, and auxiliary adjustment means for making a variation to the orientation of the mirror so as to position it to provide a second field of view.

A rear view mirror assembly of this type is described in EP-A-0463563. The main adjustment means comprises a pair of drive plungers pivotally coupled to the mirror and engaged in drive cylinders mounted on the base and the auxiliary adjustment means comprises means for varying the position of one of the drive cylinders relative to the base. This involves the use of a specially designed main adjustment mechanism.

Another mirror assembly of the above type is disclosed in FR-A-2659051. The auxiliary adjustment means is arranged to vary the orientation of the main adjustment means within the mirror case. The auxiliary adjustment means therefore has to vary the position of a unit of substantially greater weight than that of the mirror alone, thereby increasing the risk that the mirror will be subject to unacceptable vibration when the vehicle on which it is mounted is in motion.

According to the invention, in a rear view mirror assembly of the type described above, the main adjustment means is arranged to vary the orientation of an intermediate member relative to the mirror case and the auxiliary adjustment means is arranged to vary the orientation of the mirror relative to the intermediate member, drive means for the auxiliary adjustment means being mounted separately from both the intermediate member and the mirror, said drive means being coupled to the auxiliary adjustment means by a flexible drive cable.

In one form of the invention, the drive means for the auxiliary adjustment means is mounted in the mirror case. Alternatively, if there is insufficient room in the mirror case, such drive means may be mounted within the vehicle body. In either case, the drive means does not contribute to the weight supported by the pivotal mountings of the intermediate member and the mirror and consequently does not increase the liability of the mirror to vibration.

Embodiments of the invention will now be described, by way of example, with reference to the accompanying drawings, in which:
Figure 1 is an elevational view from the viewing side (the rear when mounted on a vehicle) of a vehicle door mirror assembly in accordance with the first embodiment of the invention, with the mirror removed and the main adjustment mechanism partly broken away;
Figure 2 is a plan view of the mirror shown in Figure 1 with part of the case broken away;
Figure 3 is a sectional view taken on the line 3 - 3 in Figure 1;
Figure 4 is a scrap view showing part of the mechanism of Figure 3 in an alternative position;
Figures 5 to 8 are views corresponding to Figures 1 to 4 of a second embodiment of the invention, the sectional view of Figure 7 being taken on the line 7 - 7 in Figure 5; and
Figure 9 is a view similar to Figure 1 of a rear view mirror in accordance with a third embodiment of the invention mounted on a vehicle door, with both the mirror and the main adjustment mechanism are partly broken away.

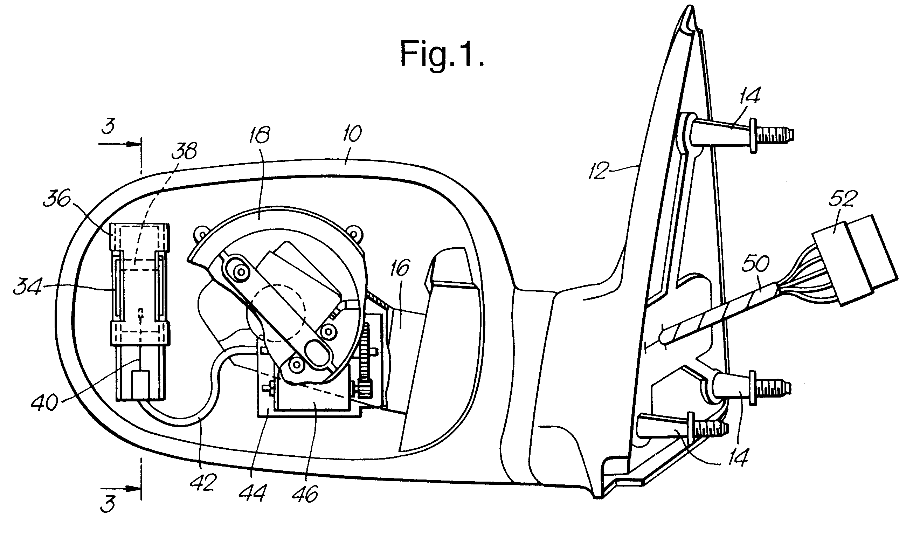

Figures 1 to 4 show an exterior rear view mirror assembly comprising a mirror case 10 mounted on a base 12 which has studs 14 for securing it to the door of a motor car.

The housing 10 encloses a static support frame 16 on which is mounted a conventional two-motor electrically powered main adjustment mechanism for adjusting the orientation of an intermediate member 20 on which is mounted the mirror carrier 22 containing a mirror glass 24.

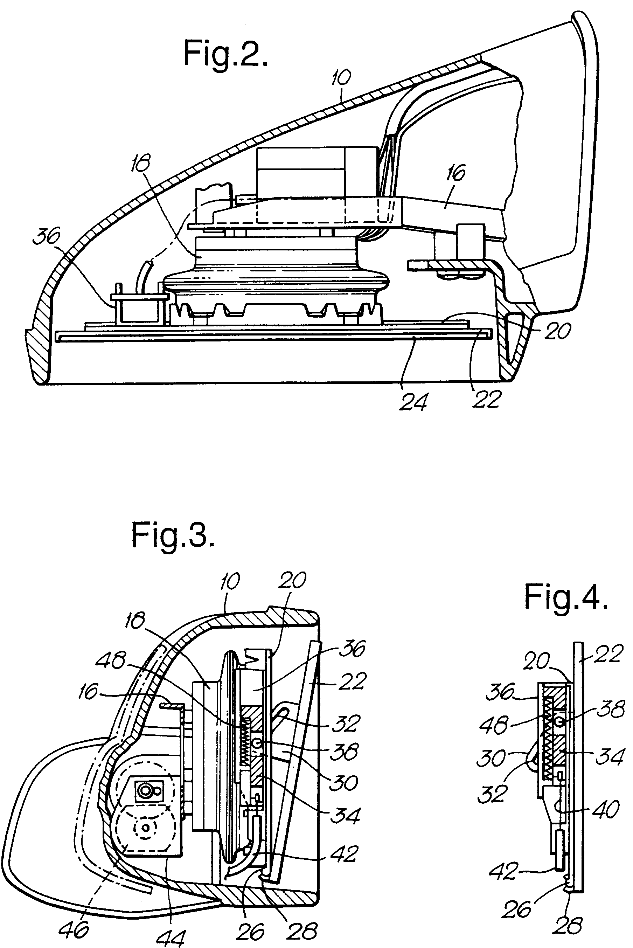

As can best be seen from Figures 3 and 4, the intermediate member 20 has a pivot formation 26 extending along its bottom edge which is engaged by a complimentary formation 28 on the mirror carrier 22. In order to control pivotal movement about the pivot formation 26, the mirror carrier 22 has a rearwardly directing flange 30 containing an oblique slot 32. A slide block 34 is slidably mounted in a vertically extending guide track 36 on the intermediate member 20 and carries a pin 38 which engages in the slot 32 in the flange 30. Movement of the slide block 34 along the track 36 tilts the mirror carrier 22 from the position illustrated in Figure 4 in which it is parallel to the intermediate member 20 and the position illustrated in Figure 3 in which it is tilted downwards. When the mirror carrier is tilted downwards, as shown in Figure 3, the mirror 24 is oriented so as to enable the user to view the corresponding rear wheel of the car so as to be able to see its proximity to a kerb or other obstruction.

The slide block 36 is connected to the central wire 40 of a Bowden cable 42. The other end of the Bowden cable 42 is connected to a drive unit 44 which includes an electric motor 46. The operation of the drive unit 44 will be described in more detail later. For the moment, it is sufficient to note that the electric motor 46 operates to cause linear movement of the wire 40 relative to the sheath of the cable 42 to move the mirror 24 between the position shown in Figures 3 and the position shown in Figure 4. A compression spring 48 acts on the slide block 36 in opposition to the Bowden cable 42 to maintain tension in the central wire 40.

A multi-core electric cable 50 projects from the base 12 of the mirror assembly and carries a connector 52 for connection to the electrical wiring system of the vehicle on which it is to be mounted to supply power to the various electrically operated components within the mirror housing 10.

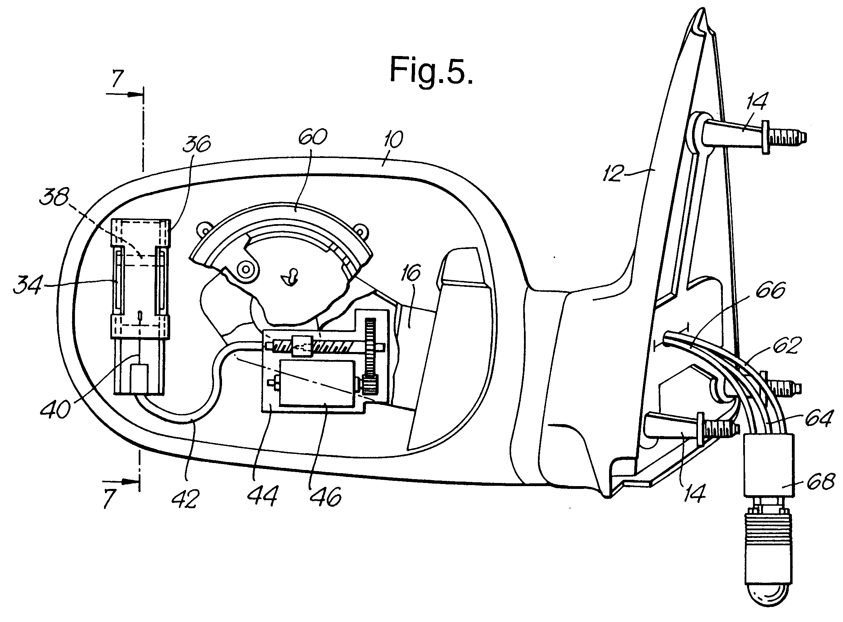

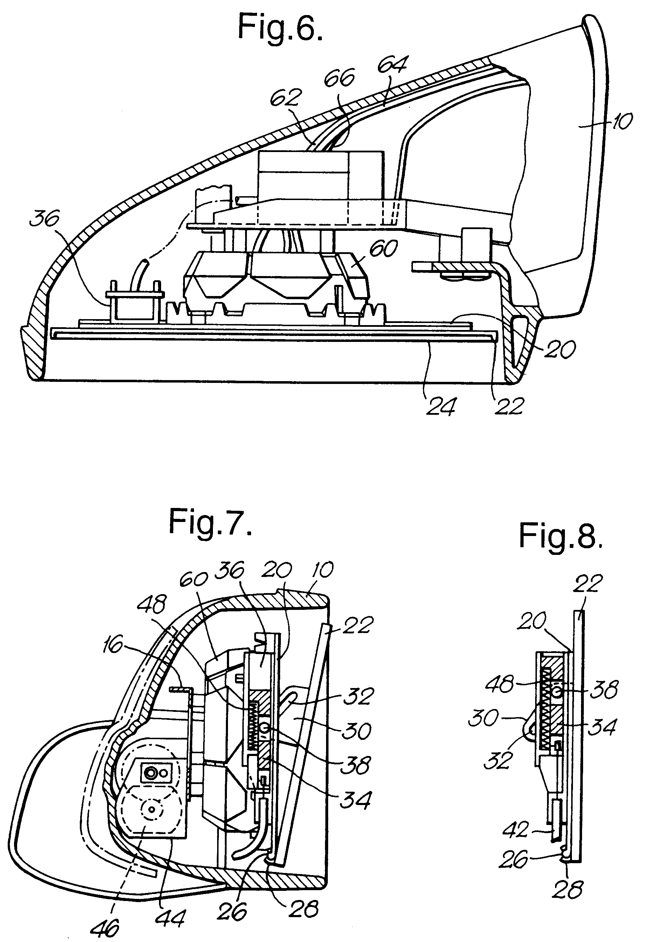

Figures 5 to 8 illustrate another embodiment of the invention, most of the components of which are identical with the corresponding components of Figures 1 to 4, are denoted by the same reference numerals and will not be described in detail. However, the electrically operated mechanism 18 for adjusting the orientation of the mirror is replaced by a mechanically operated mechanism 60. The mechanism 60 has three Bowden cables 62, 64 and 66 connected to a joy-stick operating control 68 (Figure 5).

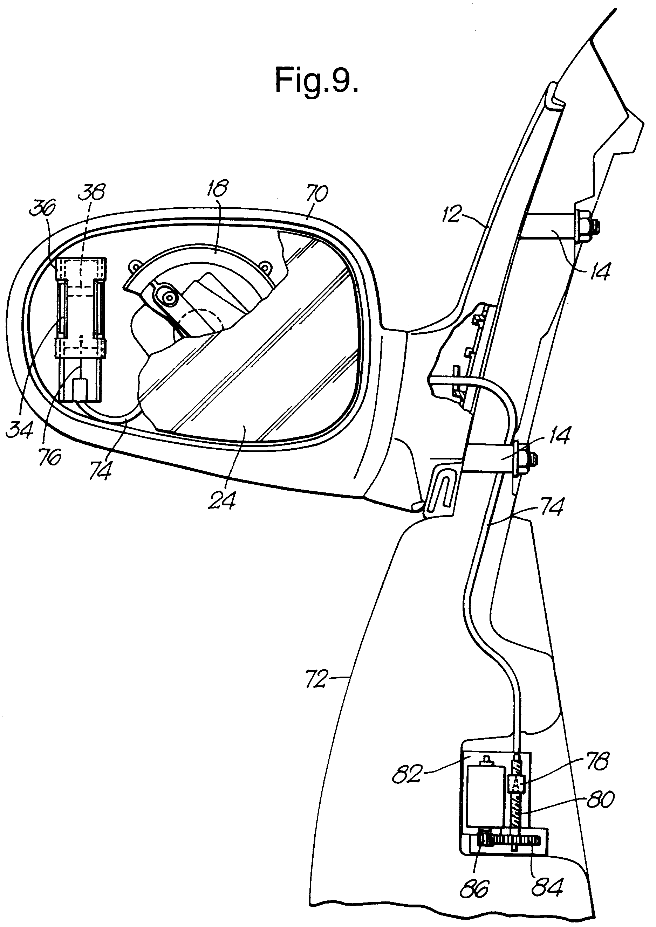

Figure 9 illustrates a further embodiment of the invention, with the base 12 attached to a vehicle door 72. The mirror housing 10 of Figures 1 to 8 is replaced by a mirror housing 70 with insufficient room to accommodate the drive unit 44, which is fitted within the door 72. The Bowden cable 42 of Figures 1 to 8 is replaced by a longer cable 74 having its central wire 76 attached at one end to the slide block 34 and at the other end to a nut 78 on a screw jack 80 within a drive unit 82. The screw jack 80 carries a relatively large pinion 84 which is arranged to be driven by a smaller pinion 86 mounted on the output shaft of an electric motor 88.

Internally, the drive unit 44 of the embodiments of Figures 1 to 8 is similar to the drive unit 82 of Figure 9.

## Claims

1. A rear view mirror assembly comprising a mirror case (10), a mirror (24) pivotally mounted in the case (10) for angular movement relative thereto, main adjustment means (18, 60) for adjusting the orientation of the mirror (24) relative to the mirror case (10) so as to position the mirror (24) to provide a first field of view, and auxiliary adjustment means (32, 34) for making a variation to the orientation of the mirror (24) so as to position it to provide a second field of view, characterised in that the main adjustment means (18, 60) is arranged to vary the orientation of an intermediate member (20) relative to the mirror case (10) and the auxiliary adjustment means (32, 34) is arranged to vary the orientation of the mirror (24) relative to the intermediate member (20), drive means (44) for the auxiliary adjustment means (32, 34) being mounted separately from both the intermediate member (20) and the mirror (24), said drive means being coupled to the auxiliary adjustment means (32, 34) by a flexible drive cable (42, 74).

2. A rear view mirror assembly according to claim 1, wherein the drive means (44) for the auxiliary adjustment means (32, 34) is mounted in the mirror case (10).

3. A rear view mirror assembly according to claim 1, wherein the drive means (82) for the auxiliary adjustment means (32, 34) is mounted within the vehicle body (72).

4. A rear view mirror assembly according to claim 1, 2 or 3, wherein the auxiliary adjustment means (32, 34) comprised a cam (32) on the mirror (24) and a cam follower (38) on the intermediate member (20).
